# EUROPÄISCHE PATENTSCHRIFT

(11) **EP 3 754 166 B1**
(45) Veröffentlichungstag und Bekanntmachung des Hinweises auf die Patenterteilung: **19.04.2023**
(21) Anmeldenummer: 20177332.2
(22) Anmeldetag: 29.05.2020
(51) Int. Cl.: F01P 7/16, F01P 7/14

(54) **BRENNKRAFTMASCHINE MIT EINEM EINEN AGR-KÜHLER UMFASSENDEN KÜHLSYSTEM**
COMBUSTION ENGINE WITH A COOLING SYSTEM COMPRISING AN AGR COOLER
MOTEUR À COMBUSTION INTERNE DOTÉ D'UN SYSTÈME DE REFROIDISSEMENT COMPRENANT UN REFROIDISSEUR AGR

(30) Priorität: 19.06.2019 DE 102019208959
(43) Veröffentlichungstag der Anmeldung: 23.12.2020
(73) Patentinhaber: VOLKSWAGEN AG, 38440 Wolfsburg (DE)
(72) Erfinder: Graurock, Christian, 10715 Berlin (DE); Lewe, Peter, 31234 Edemissen (DE)

(56) Entgegenhaltungen:
- WO-A1-2004/022940
- DE-A1- 10 224 063
- DE-A1-102010 035 174
- DE-B3-102010 064 472
- FR-A1- 2 890 697

## Beschreibung

Die Erfindung betrifft eine Brennkraftmaschine, insbesondere eine Brennkraftmaschine für ein Kraftfahrzeug. Die Brennkraftmaschine umfasst ein Kühlsystem, das einen ersten Kühlkreis ausbildet, in den ein Verbrennungsmotor ein AGR-Kühler und vorzugsweise auch ein Heizungswärmetauscher integriert sind.

Brennkraftmaschinen für Kraftfahrzeuge weisen in der Regel ein Kühlsystem auf, in dem ein Kühlmittel mittels einer oder mehrerer Kühlmittelpumpen in mindestens einem Kühlkreis gepumpt wird und dabei Wärmeenergie von in den oder die Kühlkreise integrierten Komponenten, u.a. von einem Verbrennungsmotor der Brennkraftmaschine, aufnimmt. Diese Wärmeenergie wird anschließend in mindestens einem Kühlmittelkühler sowie üblicherweise zeitweise in einem Heizungswärmetauscher an die Umgebungsluft, im Fall des Heizungswärmetauschers an die zur Klimatisierung des Innenraums des Kraftfahrzeugs vorgesehene Umgebungsluft, abgegeben.

Im Betrieb von Brennkraftmaschinen kann weiterhin eine Abgasrückführung vorgesehen sein, um die Schadstoffrohemissionen des Verbrennungsmotors der Brennkraftmaschine möglichst gering zu halten. Dabei wird Abgas aus einem Abgasstrang der Brennkraftmaschine abgezweigt und in einen Frischgasstrang der Brennkraftmaschine eingeleitet und dort mit Luft vermischt. Dieses Luft-Abgas-Gemisch wird dann dem Verbrennungsmotor als Frischgas für eine Verbrennung mit Kraftstoff zugeführt. Bekannt sind dabei sowohl Hochdruck- als auch Niederdruckabgasrückführungen, wobei im Fall einer Niederdruckabgasrückführung das Abgas stromab einer Abgasturbine eines Abgasturboladers aus dem Abgasstrang abgezweigt und stromauf eines Frischgasverdichters des Abgasturboladers in den Abgasstrang eingeleitet wird. Bei einer Hochdruckabgasrückführung erfolgt die Abzweigung dagegen, sofern ein Abgasturbolader vorgesehen ist, stromauf der Abgasturbine und die Einleitung stromab des Frischgasverdichters. Für eine Steuerung der Menge des rückgeführten Abgases ist in eine für die Überleitung von Abgas von dem Abgasstrang zu dem Frischgasstrang vorgesehene Abgasrückführleitung ein sogenanntes AGR-Ventil integriert. Weiterhin ist in eine solche Abgasrückführleitung üblicherweise auch noch ein AGR-Kühler zur Kühlung des über die Abgasrückführleitung geführten Abgases vorgesehen. Dadurch sollen negative Auswirkungen einer zu hohen Temperatur des Frischgases auf die Verbrennungsvorgänge in dem Verbrennungsmotor sowie im Fall einer Niederdruckabgasrückführung eine thermische Überlastung des Frischgasverdichters vermieden werden.

Eine Kühlung von Abgas mittels eines AGR-Kühlers kann entweder direkt oder indirekt mittels Umgebungslufts erfolgen, wobei bei einer indirekten Kühlung in dem AGR-Kühler ein Übergang von Wärmeenergie von dem Abgas auf ein flüssiges Kühlmittel erfolgt, das dann in einem Kühlmittelkühler wieder rückgekühlt wird. Der Vorteil eines solchen mittels einer Kühlflüssigkeit gekühlten AGR-Kühlers liegt in der Realisierung einer hohen Kühlleistung bei relativ kleinem Bauraum.

Nach einem Kaltstart einer Brennkraftmaschine, d.h. wenn diese und insbesondere auch das in einem Kühlsystem der Brennkraftmaschine vorhandene Kühlmittel eine Temperatur aufweist, die unterhalb einer definierten Grenztemperatur liegt und die insbesondere im Wesentlichen der Umgebungstemperatur entspricht, können in einem AGR-Kühler infolge der direkten Beaufschlagung mit dem Abgas sowie der geringen thermischen Masse des AGR-Kühlers relativ schnell relativ große Mengen an Abwärme anfallen. Dabei kann ein AGR-Kühler insbesondere auch schneller Abwärme als der Verbrennungsmotor der Brennkraftmaschine bereitstellen. Dies kann ausgenutzt werden, um möglichst schnell nach einem Kaltstart der Brennkraftmaschine ein Aufwärmen eines Innenraums eines die Brennkraftmaschine umfassenden Kraftfahrzeugs zu realisieren, indem nicht nur Abwärme des Verbrennungsmotors sondern auch Abwärme des AGR-Kühlers in einem sogenannten Heizungswärmetauscher auf zur Temperierung des Innenraums vorgesehene Luft übertragen wird. Vor diesem Hintergrund kann es sinnvoll sein, das Kühlsystem einer Brennkraftmaschine mit einem Kühlkreis auszugestalten, in den gemäß der eingangs genannten Art der Verbrennungsmotor, eine Kühlmittelpumpe, der AGR-Kühler und vorzugsweise auch der Heizungswärmetauscher integriert ist.

Ein Nachteil eines solchen Kühlkreises kann darin liegen, dass bei einem betriebswarmen Verbrennungsmotor und bei dessen Betrieb mit relativ großer Leistungsabgabe von dem Verbrennungsmotor relativ viel Abwärme in das Kühlmittel abgegeben wird, das dann anschließend den AGR-Kühler durchströmt. In dem AGR-Kühler kann dann in erheblichem Maße zusätzliche Wärmeenergie in dieses Kühlmittel übertragen werden. Dies könnte zu einem lokalen Sieden des Kühlmittels führen, wodurch dieses irreversibel geschädigt werden könnte.

Um dieses Problem zu vermeiden wird die maximale Kühlleistung des Kühlmittelkühlers eines solchen Kühlsystems üblicherweise so groß dimensioniert, dass in diesen Fällen dem Verbrennungsmotor so kaltes Kühlmittel zugeführt werden kann, dass es auch in dem AGR-Kühler, der dem Verbrennungsmotor hinsichtlich des betrachteten Kühlkreises nachgeschaltet ist, nicht zu einem Sieden des Kühlmittels kommt. Dieses Vorgehen geht jedoch mit dem Nachteil einher, dass die Kühlleistung des Kühlmittelkühlers für die meisten Betriebszustände der Brennkraftmaschine überdimensioniert ist, was nicht nur mit relativ hohen Kosten sondern auch mit einem entsprechend großen Bauraumbedarf einhergeht.

Die DE 10 2006 048 527 A1 offenbart ein Kühlsystem für eine Brennkraftmaschine bestehend aus einem Hauptkühlkreislauf mit zumindest einem Kühlmittelkühler, einer Kühlmittelpumpe und einem Thermostatventil, wobei das Thermostatventil den Kühlmittelkühler erst bei einer definierten Temperatur des Kühlmittels in den Hauptkreislauf einbindet. Um eine wirksame Absenkung der Kühlmitteltemperatur am Eintritt eines AGR-Kühlers zu erreichen, ist der Strömungsweg zwischen dem Kühlmittelkühler und dem Thermostatventil mit zwei separaten Strömungspfaden ausgestaltet ist, wobei der erste Strömungspfad von einem ersten Abschnitt des Kühlernetzes des Kühlmittelkühlers direkt zu dem Thermostatventil führt, während der zweite Strömungspfad von einem zweiten Abschnitt des Kühlernetzes des Kühlmittelkühlers über eine Elektropumpe und den AGR-Kühler zu dem Thermostatventil führt und wobei die beiden Abschnitte des Kühlernetzes durch eine in einem Wasserkasten des Kühlmittelkühlers angeordnete Trennwand baulich voneinander getrennt sind.

Die JP 2004-204828 A offenbart eine Brennkraftmaschine mit einem Kühlsystem, bei dem eine Versorgung eines AGR-Kühlers mit Kühlmittel über einen ersten Kühlkreis erfolgt, der von einem zweiten Kühlkreis, in den ein Verbrennungsmotor der Brennkraftmaschine integriert ist, separiert ist. Dabei ist in beide Kühlkreis jeweils ein Kühlmittelkühler integriert. Durch diese Ausgestaltung der Brennkraftmaschine soll verhindert werden, dass die Kühlleistung des AGR-Kühlers durch eine variierende Erwärmung des den Verbrennungsmotor durchströmenden Kühlmittels beeinflusst wird. Eine dazu vergleichbare Brennkraftmaschine ist in der US 2007/0028902 A1 beschrieben.

Die WO 2012/079715 A1 offenbart eine Brennkraftmaschine mit einem Kühlsystem. Dieses umfasst einen Hauptkühler, einen AGR-Kühler sowie eine Hauptregeleinrichtung, welche in Strömungsrichtung des Kühlmittels vor der Brennkraftmaschine angeordnet ist. Damit einerseits der AGR-Kühler eine geforderte Kühlleistung erbringen kann und andererseits eine maximale Betriebssicherheit des Kühlsystems möglich ist, umfasst dieses noch eine Nebenregeleinrichtung, welche in Strömungsrichtung des Kühlmittels nach dem AGR-Kühler angeordnet ist. Ergänzend oder alternativ kann auch eine Abgasrückführregeleinrichtung vorgesehen sein, die in Strömungsrichtung des Kühlmittels vor dem AGR-Kühler angeordnet ist.

Die DE 10 2010 035 174 A1, die WO 2004/022940 A1 und die DE 10 2010 064 472 B3 offenbaren jeweils eine Brennkraftmaschine mit einem Kühlsystem, das einen Kühlkreis umfasst, in den sowohl ein Verbrennungsmotor als auch ein AGR-Kühler der Brennkraftmaschine integriert sind.

Der Erfindung lag die Aufgabe zugrunde, bei einer Brennkraftmaschine der eingangs genannten Art auf möglichst einfache Weise eine thermische Überlastung des AGR-Kühlers und/oder des darin befindlichen Kühlmittels zu vermeiden.

Diese Aufgabe wird mittels einer Brennkraftmaschine gemäß dem Patentanspruch 1 gelöst. Ein Verfahren zum Betreiben einer solchen Brennkraftmaschine ist Gegenstand des Patentanspruchs 10. Vorteilhafte Ausgestaltungsformen der erfindungsgemäßen Brennkraftmaschine und bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist eine Brennkraftmaschine mit einem Kühlsystem, das einen ersten Kühlkreis ausbildet, in den zumindest ein Verbrennungsmotor beziehungsweise mindestens einen Kühlkanal des Verbrennungsmotors und ein AGR-Kühler beziehungsweise eine Wärmetauschseite eines solchen AGR-Kühlers integriert sind. Der AGR-Kühler ist dabei in eine Abgasrückführleitung integriert, die aus einem Abgasstrang, über den Abgas von dem Verbrennungsmotor abgeführt werden kann, abgeht und die in einen Frischgasstrang, über den dem Verbrennungsmotor Frischgas zugeführt werden kann, mündet. In diese Abgasrückführleitung kann neben dem AGR-Kühler auch noch ein AGR-Ventil zur Steuerung der Menge des über die Abgasrückführleitung rückzuführenden Abgases integriert sein. Erfindungsgemäß ist vorgesehen, dass mittels eines Ventils Kühlmittel aus einem zweiten Kühlkreis des Kühlsystems, der zumindest einen Kühlmittelkühler, d.h. einen ausschließlich für eine Rückkühlung des Kühlmittels vorgesehenen Wärmetauscher, integriert, steuerbar in einen stromab (bezüglich der Strömungsrichtung des Kühlmittels) des Verbrennungsmotors und stromauf (bezüglich der Strömungsrichtung des Kühlmittels) des AGR-Kühlers gelegenen Abschnitt des ersten Kühlkreises überführbar ist.

Dadurch, dass in diesen zweiten Kühlkreis der Kühlmittelkühler integriert ist, kann für das darin strömende Kühlmittel eine Temperatur realisiert werden, die zumindest dann, wenn die Temperatur des in dem ersten Kühlkreis stromab des Verbrennungsmotors befindlichen Kühlmittels so hoch ist, dass bei gleichzeitiger Durchführung einer Abgasrückführung die Gefahr einer thermischen Überlastung des AGR-Kühlers und/oder des darin befindlichen Kühlmittels besteht, niedriger ist. Durch ein Abzweigen eines Teils dieses relativ kalten Kühlmittels aus dem zweiten Kühlkreis und das Einleiten dieses Kühlmittels in den stromab des Verbrennungsmotors und stromauf des AGR-Kühlers gelegenen Abschnitt des ersten Kühlkreis kann eine relativ niedrige Temperatur des in den AGR-Kühler eintretenden Kühlmittels realisiert werden, wodurch trotz der relativ hohen Temperatur, die das Kühlmittel des ersten Kühlkreises unmittelbar stromab des Verbrennungsmotors aufweist, die Gefahr einer thermischen Überlastung des AGR-Kühlers und/oder des darin befindlichen Kühlmittels vermieden werden kann.

Dementsprechend sieht ein erfindungsgemäßes Verfahren vor, dass bei einem Überschreiten eines ersten Grenzwerts für die Temperatur, die das in dem ersten Kühlkreis strömende Kühlmittels innerhalb des Verbrennungsmotors oder unmittelbar stromab des Verbrennungsmotors aufweist, Kühlmittel aus dem zweiten Kühlkreis derart, d.h. in einem entsprechend großen Mengenstrom, in den ersten Kühlkreis überführt wird, dass die Temperatur, die das Kühlmittel in dem AGR-Kühler oder stromab davon aufweist, unterhalb eines zweiten Grenzwert liegt beziehungsweise bleibt.

Gemäß einer bevorzugten Ausgestaltungsform einer erfindungsgemäßen Brennkraftmaschine kann vorgesehen sein, dass der Abschnitt des ersten Kühlkreises, in den das Kühlmittel aus dem zweiten Kühlkreis überführbar ist, stromauf (bezüglich der Strömungsrichtung des Kühlmittels) einer Kühlmittelpumpe des ersten Kühlkreises, die zur Förderung des insbesondere flüssigen Kühlmittels in zumindest dem ersten Kühlkreis vorgesehen ist, liegt. Dadurch kann eine Saugwirkung der Kühlmittelpumpe genutzt werden, um Kühlmittel aus dem zweiten Kühlkreis in den ersten Kühlkreis zu überführen.

Weiterhin bevorzugt kann vorgesehen sein, dass in den ersten Kühlkreis auch ein Heizungswärmetauscher integriert ist, wodurch die bereits beschriebene, vorteilhafte Heizwirkung mittels des Heizungswärmetauschers, insbesondere für einen Innenraum eines eine solche erfindungsgemäße Brennkraftmaschine umfassenden Kraftfahrzeugs, realisiert werden kann. Dabei kann es insbesondere auch vorteilhaft sein, dass in den ersten Kühlkreis ausschließlich der Verbrennungsmotor, der AGR-Kühler sowie der Heizungswärmetauscher als für einen Wärmetausch vorgesehene Komponenten integriert sind. Dadurch kann realisiert werden, dass Abwärme, die nach einem Kaltstart der Brennkraftmaschine von dem Verbrennungsmotor und insbesondere auch von dem AGR-Kühler auf das in dem ersten Kühlkreis strömende Kühlmittel übertragen wurde, ausschließlich in dem Heizungswärmetauscher genutzt werden kann und nicht zusätzlich auch auf andere in das Kühlsystem integrierte Komponenten übertragen wird. Dadurch kann eine besonders schnelle Wirksamkeit des Heizungswärmetauschers nach einem solchen Kaltstart realisiert werden.

Gemäß einer bevorzugten Ausgestaltungsform kann vorgesehen sein, dass der zweite Kühlkreis auch den Verbrennungsmotor integriert, wobei eine Verbindungsleitung, über die Kühlmittel von dem zweiten Kühlkreis in den ersten Kühlkreis überführbar ist, aus einem Abschnitt des zweiten Kühlkreises abgeht, der stromab des Kühlmittelkühlers und stromauf des Verbrennungsmotors gelegen ist. Durch das Abzweigen von Kühlmittel aus dem zweiten Kühlkreis vorzugsweise möglichst unmittelbar stromab des Kühlmittelkühlers (d.h. zwischen dem Kühlmittelkühler und dem Abzweig liegt keine Funktionskomponente bzw. liegt ausschließlich ein ausschließlich zur Leitung des Kühlmittels vorgesehener Abschnitt des zweiten Kühlkreises) kann dieses beim Einleiten in den ersten Kühlkreis eine möglichst niedrige Temperatur aufweisen, so dass demnach auch eine möglichst geringe Mischungstemperatur des in den AGR-Kühler eintretenden Kühlmittels realisiert werden kann.

Gemäß einer weiteren bevorzugten Ausgestaltungsform kann vorgesehen sein, dass der zweite Kühlkreis einen oder mehrere weitere Wärmetauscher integriert, der/die kein(e) Kühlmittelkühler ist/sind und der/die insbesondere ein Ladeluftkühler und/oder ein Kühler eines Abgasturboladers und/oder ein Kühler einer Reduktionsmitteldosiervorrichtung, mittels der ein Reduktionsmittel in Abgas des Verbrennungsmotors 1 einbringbar ist, sein kann/können. Eine Verbindungsleitung, über die Kühlmittel von dem zweiten Kühlkreis in den ersten Kühlkreis überführbar ist, geht dann aus einem Abschnitt des zweiten Kühlkreises ab, der stromab, vorzugsweise unmittelbar stromab, oder stromauf des Kühlmittelkühlers gelegen ist.

Bei einem Ladeluftkühler handelt es sich um einen Wärmetauscher, der stromab (bezüglich der Strömungsrichtung des Frischgases) eines Frischgasverdichters in den Frischgasstrang der Brennkraftmaschine integriert ist und der (beziehungsweise eine Wärmetauschseite davon) in dem vorliegenden Fall von dem in dem zweiten Kühlkreis strömenden Kühlmittel durchströmt wird, um eine Kühlung des diesen (beziehungsweise eine andere Wärmetauschseite davon) ebenfalls durchströmenden Frischgases, das aufgrund einer Verdichtung mittels des Frischgasverdichters eine relativ hohe Temperatur aufweisen kann, zu bewirken.

Besonders bevorzugt kann dann noch vorgesehen sein, dass der zweite Kühlkreis ein Niedertemperaturkühlkreis und der darin integrierte Kühlmittelkühler ein Niedertemperaturkühlmittelkühler ist, so dass der Bereich, in dem die Temperatur des darin strömende Kühlmittels bei betriebswarmer Brennkraftmaschine liegt, niedriger ausgelegt ist als der Bereich, in dem die Temperatur des Kühlmittels liegt, das in einem dritten Kühlkreis, der zumindest einen Hochtemperaturkühlmittelkühler sowie den Verbrennungsmotor integriert, strömt. Infolge dieses relativ niedrigen Betriebstemperaturbereichs für das in dem Niedertemperaturkühlkreis strömende Kühlmittel besteht die Möglichkeit, Kühlmittel für ein Überführen in den ersten Kühlkreis auch stromauf des Niedertemperaturkühlmittelkühlers abzuzweigen.

Sofern vorgesehen ist, dass der zweite oder der dritte Kühlkreis, wie auch der erste Kühlkreis, den Verbrennungsmotor integriert, kann einerseits vorgesehen sein, dass dabei derselbe Kühlkanal Teil des ersten Kühlkreises sowie Teil des zweiten oder dritten Kühlkreises ist. Dadurch kann innerhalb des Verbrennungsmotors ein Austausch von Kühlmittel zwischen diesen Kühlkreisen erfolgen. Ebenso besteht die Möglichkeit, dass ein erster Kühlkanal Teil des ersten Kühlkreises ist und ein davon separierter zweiter Kühlkanal Teil des zweiten oder dritten Kühlkreises ist, so dass dann zumindest in dem Verbrennungsmotor kein Austausch von Kühlmittel zwischen diesen Kühlkreisen erfolgen kann.

Das Ventil, mittels dessen ein Überführen von Kühlmittel aus dem zweiten Kühlkreis in den ersten Kühlkreis steuerbar ist, kann in vorteilhafter Weise einerseits als aktiv mittels einer Steuerungsvorrichtung ansteuerbares damit hinsichtlich des Kühlmitteldurchlasses verstellbares Steuerventil oder als sich selbsttätig aufgrund einer daran anliegenden Temperatur einstellendes Thermostatventil oder als Kombination aus einem solchen Steuerventil und einem solchen Thermostatventil ausgebildet sein. Bevorzugt vorgesehen ist eine Ausgestaltung als Steuerventil, weil dadurch eine jederzeit optimierte Überführung von Kühlmittel aus dem zweiten Kühlkreis in den ersten Kühlkreis realisierbar ist. Ein Vorteil der Ausgestaltung als Thermostatventil kann jedoch in den relativ geringen Kosten für ein solches Thermostatventil und in der nicht erforderlichen aktiven Ansteuerung liegen.

Weiterhin bevorzugt kann vorgesehen sein, dass das Ventil derart ausgebildet und in den ersten Kühlkreis integriert ist, dass mittels diesem bedarfsweise ausschließlich aus dem zweiten Kühlkreis stammendes Kühlmittel dem AGR-Kühler zuführbar ist. Auf diese Weise kann dem AGR-Kühler besonders kaltes Kühlmittel zugeführt und damit für diesen eine besonders hohe Kühlleistung realisiert werden. Für diesen Zweck kann das Ventil beispielsweise als Drehschieberventil ausgebildet sein, das insbesondere im Bereich der Mündung der Verbindungsleitung, die den zweiten Kühlkreis mit dem ersten Kühlkreis verbindet, in den ersten Kühlkreis integriert sein kann.

Bei dem Verbrennungsmotor einer erfindungsgemäßen Brennkraftmaschine kann es sich um einen (selbstzündenden und qualitätsgeregelten) Dieselmotor oder um einen (fremdgezündeten und quantitätsgeregelten) Ottomotor oder um eine Kombination aus Diesel- und Ottomotor, z.B. um einen Verbrennungsmotor mit homogener Kompressionszündung, handeln. Der Verbrennungsmotor kann dabei grundsätzlich mit einem beliebigen Kraftstoff, der überwiegend aus Wasserstoff und/oder Kohlenwasserstoffen besteht, insbesondere mit einem derzeit üblichen Flüssigkraftstoff (d.h. mit Diesel-Kraftstoff oder Benzin) oder mit einem bei Umgebungsbedingungen gasförmigen Kraftstoff (insbesondere mit Erdgas (CNG), LNG, LPG oder Wasserstoff) betrieben werden beziehungsweise betreibbar sein.

Eine erfindungsgemäße Brennkraftmaschine kann insbesondere Teil eines Kraftfahrzeugs sein. Dabei kann der Verbrennungsmotor der Brennkraftmaschine insbesondere zur direkten oder indirekten Bereitstellung der Antriebsleistung für das Kraftfahrzeug vorgesehen sein. Bei einem solchen Kraftfahrzeug kann es sich insbesondere um ein radbasiertes und nicht schienengebundenen Kraftfahrzeug (vorzugsweise ein PKW oder ein LKW) handeln.

Die Erfindung wird nachfolgend anhand von in den Zeichnungen dargestellten Ausgestaltungsbeispielen näher erläutert. In den Zeichnungen zeigt:
- Fig. 1:: eine erfindungsgemäße Brennkraftmaschine gemäß einer ersten Ausgestaltungsform;
- Fig. 2:: eine erfindungsgemäße Brennkraftmaschine gemäß einer zweiten Ausgestaltungsform; und
- Fig. 3:: eine erfindungsgemäße Brennkraftmaschine gemäß einer dritten Ausgestaltungsform.

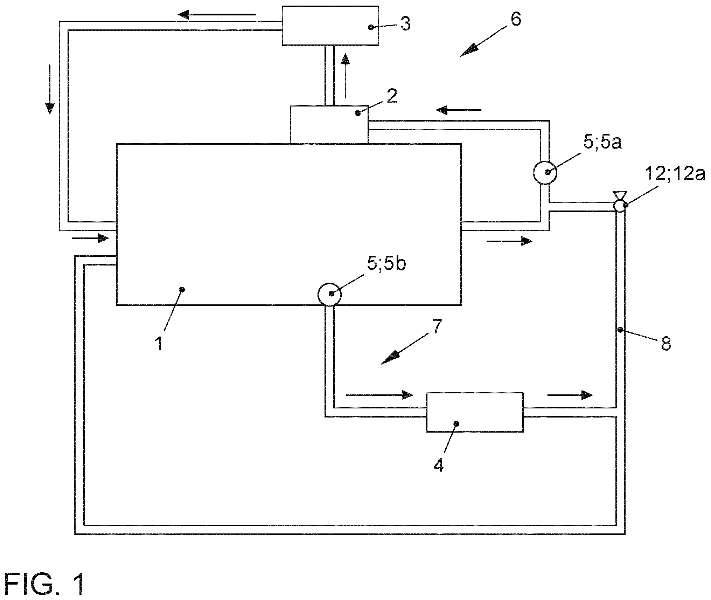

Die Fig. 1 bis 3 zeigen in stark vereinfachten Darstellungen und in verschiedenen Ausgestaltungsformen erfindungsgemäße Brennkraftmaschinen. Diese umfassen jeweils einen Verbrennungsmotor 1 sowie ein Kühlsystem. Weiterhin umfassen die Brennkraftmaschinen jeweils einen AGR-Kühler 2, einen Heizungswärmetauscher 3, einen oder zwei Kühlmittelkühler 4 sowie zwei oder drei Kühlmittelpumpen 5. Sämtliche dieser Komponenten sind in das Kühlsystem integriert und dazu über Kühlmittelleitungen des Kühlsystems fluidleitend miteinander verbunden. Das Kühlsystem bildet einen ersten Kühlkreis 6 aus, in den der Verbrennungsmotor 1 beziehungsweise ein Kühlkanal davon, eine erste, vorzugsweise elektromotorisch antreibbare Kühlmittelpumpe 5a, der AGR-Kühler 2 (beziehungsweise eine erste Wärmetauschseite davon) sowie der Heizungswärmetauscher 3 (beziehungsweise eine erste Wärmetauschseite davon) integriert sind.

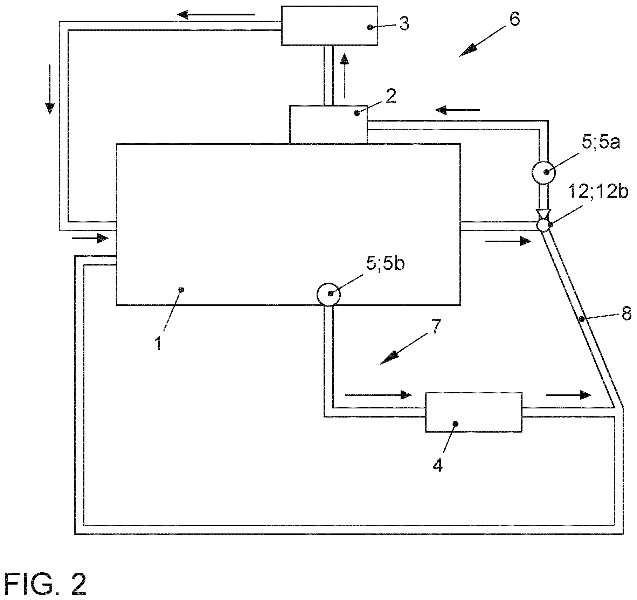

Bei den Brennkraftmaschinen gemäß den Fig. 1 und 2 ist weiterhin ein zweiter Kühlkreis 7 vorgesehen, der ebenfalls den Verbrennungsmotor 1, eine zweite Kühlmittelpumpe 5b, die beispielsweise von dem Verbrennungsmotor 1 selbst antreibbar ist, sowie den Kühlmittelkühler 4 integriert. Stromab des Kühlmittelkühlers 4 geht aus dem zweiten Kühlkreis 7 dieser Brennkraftmaschinen eine Verbindungsleitung 8 ab, die in einen Abschnitt des ersten Kühlkreises 6 mündet, der stromab des Verbrennungsmotors 1 und stromauf sowohl der ersten Kühlmittelpumpe 5a als auch des stromab dieser ersten Kühlmittelpumpe 5a angeordneten AGR-Kühlers 2 gelegen ist.

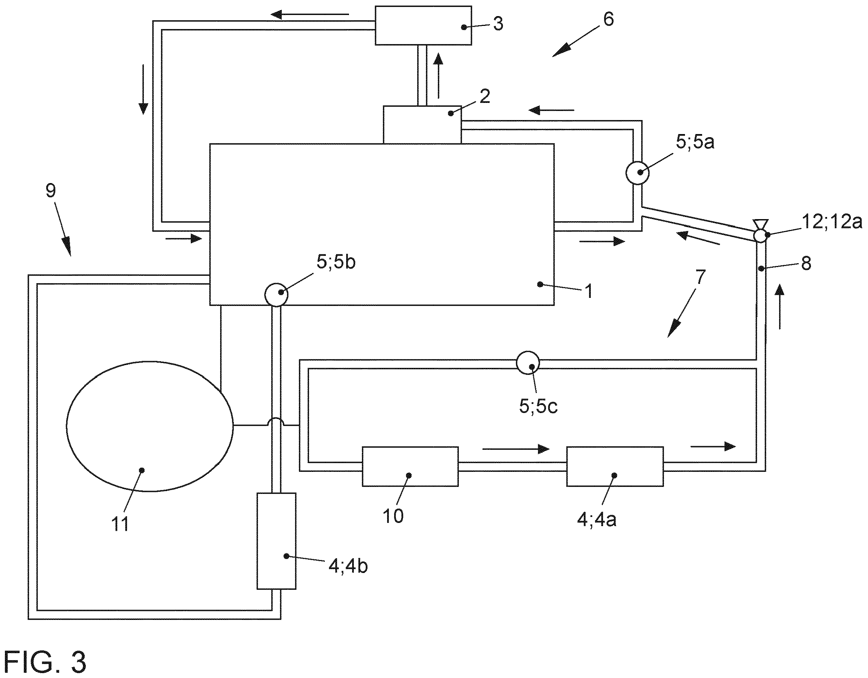

Ein dem zweiten Kühlkreis 7 der Brennkraftmaschinen gemäß den Fig. 1 und 2 entsprechender Kühlkreis 9 ist auch bei der Brennkraftmaschine gemäß der Fig. 3 vorgesehen, wobei dieser darin einen dritten Kühlkreis 9 darstellt. In einen zweiten Kühlkreis 7 dieser Brennkraftmaschine gemäß der Fig. 3 ist dagegen ein oder sind mehrere weitere Wärmetauscher 10, der/die beispielsweise ein Ladeluftkühler und/oder ein Kühler eines Abgasturboladers und/oder ein Kühler einer Reduktionsmitteldosiervorrichtung sein kann/können, sowie ein weiterer Kühlmittelkühler 4 und zudem eine weitere, vorzugsweise elektromotorisch antreibbar Kühlmittelpumpe 5c integriert. Vorgesehen ist, dass der zweite Kühlkreis 7 ein Niedertemperaturkühlkreis ist, während der dritte Kühlkreis 9 ein Hochtemperaturkühlkreis ist, in dem die Temperatur des darin strömenden Kühlmittels bei betriebswarmer Brennkraftmaschine höher liegend ausgelegt ist als die Temperatur des in dem Niedertemperaturkühlkreis strömenden Kühlmittels. Bei dem Kühlmittelkühler 4 des zweiten Kühlkreises 7 der Brennkraftmaschine gemäß der Fig. 3 handelt es sich demnach um einen Niedertemperaturkühlmittelkühler 4a und bei dem Kühlmittelkühler 4 des dritten Kühlkreises 9 um einen Hochtemperaturkühlmittelkühler 4b.

Bei der Brennkraftmaschine gemäß der Fig. 3 ist ebenfalls eine Verbindungsleitung 8 vorgesehen, die wiederum in einen Abschnitt des ersten Kühlkreises 6 mündet, der stromab des Verbrennungsmotors 1 und stromauf sowohl der ersten Kühlmittelpumpe 5a als auch des AGR-Kühlers 2 gelegen ist. Diese Verbindungsleitung 8 geht aus dem zweiten Kühlkreis 7 und konkret unmittelbar stromab des in diesen zweiten Kühlkreis 7 integrierten Niedertemperaturkühlmittelkühlers 4b ab.

In der Fig. 3 ist weiterhin noch ein Ausgleichsbehälter 11 dargestellt, der einerseits mit dem Verbrennungsmotor 1 und dabei konkret sowohl mit dem ersten Kühlkreis 6 als auch mit dem dritten Kühlkreis 9, und andererseits mit dem zweiten Kühlkreis 7 fluidleitend verbunden ist. Dieser Ausgleichsbehälter 11 stellt ein Reservoir für das Kühlmittel des Kühlsystems dar und dient dazu, insbesondere temperaturbedingte Ausdehnungen des Kühlmittels durch eine Veränderung des Füllstands des Kühlmittels in dem Ausgleichsbehälter 11 auszugleichen. Dazu kann ein solcher Ausgleichsbehälter 11 insbesondere teilweise mit dem Kühlmittel und teilweise mit einem Gas gefüllt sein, wobei bei einer Verwendung eines flüssigen Kühlmittels auf eine strukturelle Trennung dieser beiden Fluide verzichtet werden kann.

Ein solcher Ausgleichsbehälter 11 kann auch bei den Brennkraftmaschinen gemäß den Fig. 1 und 2 vorgesehen sein, wobei dann der Ausgleichsbehälter 11 vorzugsweise sowohl mit dem ersten Kühlkreis 6 als auch mit dem zweiten Kühlkreis 7 fluidleitend verbunden sein kann.

Die konkrete Art der Integration des Verbrennungsmotors 1, des AGR-Kühlers 2 und des Heizungswärmetauschers 3 in den jeweiligen ersten Kühlkreis 6 der Brennkraftmaschinen gemäß den Fig. 1 bis 3 weist u.a. den Vorteil auf, dass nach einem Kaltstart der Brennkraftmaschine das in dem ersten Kühlkreis 6 geförderte Kühlmittel sowohl durch einen Übergang von Abwärme von dem Verbrennungsmotor 1 als auch durch einen Übergang von Abwärme von dem AGR-Kühler 2 erwärmt wird, bevor dieses Kühlmittel in den Heizungswärmetauscher 3 strömt, in dem dieses ein Aufwärmen von den Heizungswärmetauscher 3 ebenfalls (beziehungsweise eine zweite Wärmetauschseite davon) durchströmender Luft bewirkt. Dadurch kann eine schnelle Wirksamkeit des Heizungswärmetauschers 3 nach einem Kaltstart der jeweiligen Brennkraftmaschine realisiert werden. Während einer solchen Aufwärmphase im Betrieb der Brennkraftmaschinen kann vorgesehen sein, zumindest die jeweiligen zweiten Kühlmittelpumpen 5b, die in die zweiten Kühlkreise 7 der Brennkraftmaschinen gemäß den Fig. 1 und 2 sowie in den dritten Kühlkreis 9 der Brennkraftmaschine gemäß der Fig. 3 integriert sind, nicht oder nicht wirksam zu betreiben, so dass ein möglichst großer Anteil der von dem Verbrennungsmotor 1 erzeugten Abwärme auf das in dem jeweiligen ersten Kühlkreis 6 strömende Kühlmittel übertragen werden kann. Zudem kann dadurch ein möglichst schnelles Aufwärmen des Verbrennungsmotors 1 selbst gewährleistet werden.

Sofern der Verbrennungsmotor 1 der jeweiligen Brennkraftmaschine und damit auch das diesen durchströmende Kühlmittel eine definierte Betriebstemperatur erreicht hat, könnte es aufgrund der Integration sowohl des Verbrennungsmotors 1 als auch des AGR-Kühlers 2 in denselben (ersten) Kühlkreis 6 zu einer thermischen Überlastung des Kühlmittels in dem AGR-Kühler 2 oder auch des AGR-Kühlers 2 selbst kommen. Dies gilt insbesondere, wenn der jeweilige Verbrennungsmotor 1 mit relativ hoher Betriebslast betrieben wird, was mit relativ hohen Abgastemperaturen einhergehen kann, und gleichzeitig eine relativ hohe AGR-Rate eingestellt ist, so dass relativ große Massenströme an Abgas über den jeweiligen AGR-Kühler 2 (beziehungsweise eine zweite Wärmetauschseite davon) geführt werden. Um eine solche thermische Überlastung zu vermeiden, kann in einem solchen Fall relativ kaltes Kühlmittel aus dem jeweiligen zweiten Kühlkreis 7 der Brennkraftmaschinen über die dazugehörige Verbindungsleitung 8 in den dazugehörigen ersten Kühlkreis 6 überführt werden. Dadurch kann sich im Bereich der Mündung der Verbindungsleitung 8 eine Mischungstemperatur des Kühlmittels einstellen, die niedriger ist als die Temperatur des Kühlmittels, das sich in dem jeweiligen ersten Kühlkreis 6 unmittelbar stromab des Verbrennungsmotors 1 befindet. Dieses relativ kalte Kühlmittel durchströmt anschließend den jeweiligen AGR-Kühler 2 und verhindert dadurch eine thermische Überlastung dieses Kühlmittels in dem AGR Kühler 2 und/oder des AGR Kühlers 2 selbst.

Eine Mengensteuerung bei einem Überführen von Kühlmittel aus dem jeweiligen zweiten Kühlkreis 7 in den dazugehörigen ersten Kühlkreis 1 erfolgt mittels eines Ventils 12, das bei den Brennkraftmaschinen gemäß den Fig. 1 und 3 jeweils als aktiv ansteuerbares Steuerventil 12a ausgebildet ist, das in die jeweilige Verbindungsleitung 8 integriert ist. Im Gegensatz dazu ist bei der Brennkraftmaschine gemäß der Fig. 2 ein Thermostatventil 12b vorgesehen, das im Bereich der Mündung der Verbindungsleitung 8 in den ersten Kühlkreis 6 angeordnet ist. Eine solche Anordnung für das Thermostatventil 12b ist dahingehend vorteilhaft, dass dieses von einer sogenannten Pilotströmung von Kühlmittel, das in dem ersten Kühlkreis 6 strömend von dem Verbrennungsmotor 1 kommt, durchströmt werden kann. Diese Pilotströmung dient dazu, ein Dehnstoffelement des Thermostatventils 12b zu temperieren, um ein selbsttätiges Öffnen des Thermostatventils 12b bei einem Überschreiten einer definierten Grenztemperatur dieses in dem ersten Kühlkreis 6 strömenden und von dem Verbrennungsmotor 1 kommenden Kühlmittels zu realisieren. Ein solches Thermostatventil kann auch bei der Brennkraftmaschine gemäß der Fig. 3 zum Einsatz kommen.

### Bezugszeichenliste

- 1: Verbrennungsmotor
- 2: AGR-Kühler
- 3: Heizungswärmetauscher
- 4: Kühlmittelkühler
- 4a: Niedertemperaturkühlmittelkühler
- 4b: Hochtemperaturkühlmittelkühler
- 5: Kühlmittelpumpe
- 5a: erste Kühlmittelpumpe
- 5b: zweite Kühlmittelpumpe
- 5c: weitere Kühlmittelpumpe
- 6: erster Kühlkreis
- 7: zweiter Kühlkreis
- 8: Verbindungsleitung
- 9: dritter Kühlkreis
- 10: weiterer Wärmetauscher
- 11: Ausgleichsbehälter
- 12: Ventil
- 12a: Steuerventil
- 12b: Thermostatventil

## Patentansprüche

1. Brennkraftmaschine mit einem Kühlsystem, das einen ersten Kühlkreis (6) ausbildet, in den ein Verbrennungsmotor (1) und ein AGR-Kühler (2) integriert sind, **dadurch gekennzeichnet, dass** mittels eines Ventils (12) Kühlmittel aus einem zweiten Kühlkreis (7), der zumindest einen Kühlmittelkühler integriert, steuerbar in einen stromab des Verbrennungsmotors (1) und stromauf des AGR-Kühlers (2) gelegenen Abschnitt des ersten Kühlkreises (6) überführbar ist.

2. Brennkraftmaschine gemäß Anspruch 1, **dadurch gekennzeichnet, dass** der Abschnitt des ersten Kühlkreises (8), in den das aus dem zweiten Kühlkreis (7) stammende Kühlmittel überführbar ist, stromauf einer Kühlmittelpumpe (5a) liegt.

3. Brennkraftmaschine gemäß Anspruch 1 oder 2, **dadurch gekennzeichnet, dass** in den ersten Kühlkreis (6) auch ein Heizungswärmetauscher (3) integriert ist.

4. Brennkraftmaschine gemäß einem der Ansprüche 1 bis 3, **dadurch gekennzeichnet, dass** auch der zweite Kühlkreis (7) den Verbrennungsmotor (1) integriert, wobei eine Verbindungsleitung (8), über die Kühlmittel von dem zweiten Kühlkreis (7) in den ersten Kühlkreis (6) überführbar ist, aus einem Abschnitt des zweiten Kühlkreises (7) abgeht, der stromab des Kühlmittelkühlers (4) und stromauf des Verbrennungsmotors (1) gelegen ist.

5. Brennkraftmaschine gemäß einem der Ansprüche 1 bis 3, **dadurch gekennzeichnet, dass** der zweite Kühlkreis (7) einen weiteren Wärmetauscher (10) integriert, wobei eine Verbindungsleitung (8), über die Kühlmittel von dem zweiten Kühlkreis (7) in den ersten Kühlkreis (6) überführbar ist, aus einem Abschnitt des zweiten Kühlkreises (7) abgeht, der stromab oder stromauf des Kühlmittelkühlers (4) gelegen ist.

6. Brennkraftmaschine gemäß Anspruch 5, **dadurch gekennzeichnet, dass** der zweite Kühlkreis (7) ein Niedertemperaturkühlkreis und der darin integrierte Kühlmittelkühler (4) ein Niedertemperaturkühlmittelkühler (4a) ist und dass ein dritter Kühlkreis (9) vorgesehen ist, der einen Hochtemperaturkühlmittelkühler (4b) sowie den Verbrennungsmotor (1) integriert.

7. Brennkraftmaschine gemäß einem der vorhergehenden Ansprüche, **dadurch gekennzeichnet, dass** das Ventil (12) als Steuerventil (12a) und/oder als Thermostatventil (12b) ausgebildet ist.

8. Brennkraftmaschine gemäß einem der vorhergehenden Ansprüche, **dadurch gekennzeichnet, dass** das Ventil (12) derart ausgebildet und in den ersten Kühlkreis (6) integriert ist, dass mittels diesem bedarfsweise ausschließlich aus dem zweiten Kühlkreis (7) stammendes Kühlmittel dem AGR-Kühler (2) zuführbar ist.

9. Brennkraftmaschine gemäß Anspruch 8, **dadurch gekennzeichnet, dass** das Ventil (12) als Drehschieberventil ausgebildet ist.

10. Verfahren zum Betreiben einer Brennkraftmaschine gemäß einem der vorhergehenden Ansprüche, **dadurch gekennzeichnet, dass** bei einem Überschreiten eines ersten Grenzwerts für die Temperatur, die das in dem ersten Kühlkreis (6) strömende Kühlmittels in dem Verbrennungsmotor (1) oder unmittelbar stromab des Verbrennungsmotors (1) aufweist, Kühlmittel aus dem zweiten Kühlkreis (7) derart in den ersten Kühlkreis (6) überführt wird, dass die Temperatur, die das Kühlmittel in dem AGR-Kühler (2) oder unmittelbar stromab davon aufweist, unterhalb eines zweiten Grenzwerts liegt.

## Claims

1. Internal combustion engine with a cooling system which configures a first cooling circuit (6), into which a combustion engine (1) and an EGR cooler (2) are integrated, **characterized in that** coolant can be transferred from a second cooling circuit (7) which integrates at least one coolant cooler controllably by means of a valve (12) into a portion of the first cooling circuit (6), which portion lies downstream of the combustion engine (1) and upstream of the EGR cooler (2).

2. Internal combustion engine according to Claim 1, **characterized in that** that portion of the first cooling circuit (8), into which the coolant which comes from the second cooling circuit (7) can be transferred, lies upstream of a coolant pump (5a).

3. Internal combustion engine according to Claim 1 or 2, **characterized in that** a heater heat exchanger (3) is also integrated into the first cooling circuit (6).

4. Internal combustion engine according to one of Claims 1 to 3, **characterized in that** the second cooling circuit (7) also integrates the combustion engine (1), a connecting line (8), via which coolant can be transferred from the second cooling circuit (7) into the first cooling circuit (6), emanates from a portion of the second cooling circuit (7), which portion lies downstream of the coolant cooler (4) and upstream of the combustion engine (1).

5. Internal combustion engine according to one of Claims 1 to 3, **characterized in that** the second cooling circuit (7) integrates a further heat exchanger (10), a connecting line (8), via which coolant can be transferred from the second cooling circuit (7) into the first cooling circuit (6), emanating from a portion of the second cooling circuit (7), which portion lies downstream or upstream of the coolant cooler (4).

6. Internal combustion engine according to Claim 5, **characterized in that** the second coolant circuit (7) is a low-temperature cooling circuit and the coolant cooler (4) which is integrated into it is a low-temperature coolant cooler (4a), and **in that** a third cooling circuit (9) is provided which integrates a high-temperature coolant cooler (4b) and the combustion engine (1).

7. Internal combustion engine according to one of the preceding claims, **characterized in that** the valve (12) is configured as a control valve (12a) and/or as a thermostatic valve (12b).

8. Internal combustion engine according to one of the preceding claims, **characterized in that** the valve (12) is configured and integrated into the first cooling circuit (6) in such a way that coolant which comes exclusively from the second cooling circuit (7) can be fed as required to the EGR cooler (2) by means of this valve (12).

9. Internal combustion engine according to Claim 8, **characterized in that** the valve (12) is configured as a rotary slide valve.

10. Method for operating an internal combustion engine according to one of the preceding claims, **characterized in that**, if a first limit value for the temperature of the coolant flowing in the first cooling circuit (6) in the combustion engine (1) or directly downstream of the combustion engine (1) is exceeded, coolant is transferred from the second cooling circuit (7) into the first cooling circuit (6) in such a way that the temperature of the coolant in the EGR cooler (2) or directly downstream thereof lies below a second limit value.

## Revendications

1. Moteur à combustion interne avec un système de refroidissement qui forme un premier circuit de refroidissement (6) dans lequel sont intégrés un moteur à combustion (1) et un refroidisseur EGR (2), **caractérisé en ce qu'**au moyen d'une soupape (12), du liquide de refroidissement provenant d'un deuxième circuit de refroidissement (7), qui intègre au moins un refroidisseur de liquide de refroidissement, peut être transféré de manière commandée dans une section du premier circuit de refroidissement (6) située en aval du moteur à combustion (1) et en amont du refroidisseur EGR (2) .

2. Moteur à combustion interne selon la revendication 1, **caractérisé en ce que** la section du premier circuit de refroidissement (8) dans laquelle le liquide de refroidissement provenant du deuxième circuit de refroidissement (7) peut être transféré est située en amont d'une pompe à liquide de refroidissement (5a).

3. Moteur à combustion interne selon la revendication 1 ou 2, **caractérisé en ce qu'**un échangeur de chaleur de chauffage (3) est également intégré dans le premier circuit de refroidissement (6).

4. Moteur à combustion interne selon l'une quelconque des revendications 1 à 3, **caractérisé en ce que** le deuxième circuit de refroidissement (7) intègre également le moteur à combustion (1), une conduite de liaison (8) par l'intermédiaire de laquelle du liquide de refroidissement peut être transféré du deuxième circuit de refroidissement (7) au premier circuit de refroidissement (6) partant d'une section du deuxième circuit de refroidissement (7) qui est située en aval du refroidisseur de liquide de refroidissement (4) et en amont du moteur à combustion (1).

5. Moteur à combustion interne selon l'une quelconque des revendications 1 à 3, **caractérisé en ce que** le deuxième circuit de refroidissement (7) intègre un autre échangeur de chaleur (10), une conduite de liaison (8) par l'intermédiaire de laquelle du liquide de refroidissement peut être transféré du deuxième circuit de refroidissement (7) au premier circuit de refroidissement (6) partant d'une section du deuxième circuit de refroidissement (7) qui est située en aval ou en amont du refroidisseur de liquide de refroidissement (4) .

6. Moteur à combustion interne selon la revendication 5, **caractérisé en ce que** le deuxième circuit de refroidissement (7) est un circuit de refroidissement à basse température et le refroidisseur de liquide de refroidissement (4) qui y est intégré est un refroidisseur de liquide de refroidissement à basse température (4a), et **en ce qu'**un troisième circuit de refroidissement (9) est prévu, qui intègre un refroidisseur de liquide de refroidissement à haute température (4b) ainsi que le moteur à combustion (1).

7. Moteur à combustion interne selon l'une quelconque des revendications précédentes, **caractérisé en ce que** la soupape (12) est configurée sous forme de soupape de commande (12a) et/ou sous forme de soupape thermostatique (12b) .

8. Moteur à combustion interne selon l'une quelconque des revendications précédentes, **caractérisé en ce que** la soupape (12) est configurée et intégrée dans le premier circuit de refroidissement (6) de telle sorte qu'au moyen de celle-ci, du liquide de refroidissement provenant exclusivement du deuxième circuit de refroidissement (7) peut au besoin être acheminé vers le refroidisseur EGR (2) .

9. Moteur à combustion interne selon la revendication 8, **caractérisé en ce que** la soupape (12) est configurée sous forme de soupape à tiroir rotatif.

10. Procédé d'exploitation d'un moteur à combustion interne selon l'une quelconque des revendications précédentes, **caractérisé en ce que**, lorsqu'une première valeur limite pour la température du liquide de refroidissement circulant dans le premier circuit de refroidissement (6) est dépassée dans le moteur à combustion (1) ou directement en aval du moteur à combustion (1), du liquide de refroidissement du deuxième circuit de refroidissement (7) est transféré dans le premier circuit de refroidissement (6) de telle sorte que la température du liquide de refroidissement dans le refroidisseur EGR (2) ou directement en aval de celui-ci est inférieure à une deuxième valeur limite.
